# EUROPÄISCHE PATENTSCHRIFT

(11) **EP 3 391 005 B1**
(45) Veröffentlichungstag und Bekanntmachung des Hinweises auf die Patenterteilung: **29.07.2020**
(21) Anmeldenummer: 16815841.8
(22) Anmeldetag: 16.12.2016
(51) Int. Cl.: G01M 15/04, G01M 3/02

(54) **LECKTESTMASCHINE FÜR EINEN ZYLINDERKOPF, MOTORBLOCK ODER DERGLEICHEN**
LEAK TEST MACHINE FOR A CYLINDER HEAD, ENGINE BLOCK OR SIMILAR
MACHINE DE TEST DE FUITE POUR UNE CULASSE, UN BLOC-MOTEUR OU SIMILAIRE

(30) Priorität: 16.12.2015 DE 202015106873 U
(43) Veröffentlichungstag der Anmeldung: 24.10.2018
(73) Patentinhaber: ELWEMA Automotive GmbH, 73479 Ellwangen (DE)
(72) Erfinder: ALVAREZ, Antonio, 52224 Stolberg (DE); ILG, Eberhard, 73492 Rainau-Saverwang (DE)
(74) Vertreter: Lippert Stachow Patentanwälte Rechtsanwälte
(86) Internationale Anmeldenummer: PCT/EP2016/081532
(87) Internationale Veröffentlichungsnummer: WO 2017/103176

(56) Entgegenhaltungen:
- DE-A1-102012 213 186
- US-A1- 2013 031 962
- US-A1- 2013 074 584

## Beschreibung

### TECHNISCHES GEBIET

Die Erfindung betrifft allgemein eine Lecktestmaschine und eine Anlage zur Dichtheitsprüfung eines Zylinderkopfes, eines Motorblocks oder eines vergleichbar industriell gefertigten, technischen Werkstücks mit mindestens einem auf Dichtheit zu prüfenden Innenraum. Die Erfindung betrifft ferner deren Verwendung in der Dichtheitsprüfung industrieller Bauteile sowie ein Verfahren zur industriellen Dichtheitsprüfung, insbesondere von aus Gussrohlingen gefertigten Werkstücken aus Metall. Die Begriffe Dichtheitsprüfung und Prüfen auf Leckage (Lecktesten) sind hier gleichbedeutend.

### STAND DER TECHNIK UND AUFGABENSTELLUNG

In der industriellen Fertigung von Verbrennungsmotoren werden Werkstücke mit Hohlvolumen bzw. Innenraum, insbesondere Zylinderkopf und Motorblock bzw. Kurbelgehäuse, nach spanender Bearbeitung typischerweise in einer Lecktestmaschine auf Undichtheiten der verschiedenen Innenräume geprüft. Nur so kann die ordnungsgemäße Funktion des endgefertigten Motors sichergestellt werden, weil derartige Werkstücke bzw. Bauteile, meist aus Gussrohlingen gefertigt, herstellungsbedingt kritische Undichtheiten der Innenräume aufweisen können, z.B. gussfehlerbedingte Poren oder Risse. Bei Undichtigkeit eines Druck- bzw. Innenraums wird das Bauteil unter Betriebsdruck ganz oder teilweise versagen. Dies gilt sowohl für das Schmierölsystem, als auch und insbesondere für das feiner verzweigte Kanalsystem für Kühlflüssigkeit. Es ist vorteilhaft, jedes Werkstück vor der Weiterverarbeitung bzw. Endmontage auf die Dichtheit des jeweiligen Innenraums hin zu prüfen. Dies gilt insbesondere bei den geringen Wandstärken von Werkstücken aus Aluminium-Druckguss (wegen der zur Emissionsminderung gewünschten Gewichtsreduzierung), aber auch bei konventioneller Herstellung in Grauguss.

Ist z.B. die Dichtheit des Kühlsystems nicht gegeben, kann Kühlflüssigkeit in den Brennraum oder in den Schmierkreis gelangen. Dadurch würde je nach Ausmaß des Lecks die Lebensdauer des Motors erheblich reduziert oder der Motor kann kurzfristig zerstört werden. Ein nachträglicher Austausch eines undichten Zylinderkopfes oder Motorblocks wäre aus Kostengründen nicht vertretbar. Daher sind undichte Komponenten unbedingt auszusortieren und als Ausschuss von der Endmontage des Verbrennungsmotors auszuschließen oder einer Ausbesserung zu unterziehen und erneut zu prüfen. Eine entsprechende Dichtheitsprüfung ist Hauptzweck einer gattungsgemäßen Lecktestmaschine.

Eine Lecktestmaschine älterer Generation ist aus der Patentanmeldung EP 0 122 551 A2 bekannt. Diese Lecktestmaschine zur Dichtheitsprüfung eines Zylinderkopfes hat eine Dichtplatte mit einer Dichtungsanordnung passend zum motorblockseitig offenen Anschlussbereich des Zylinderkopfes, ein Maschinengestell mit mindestens einer Werkstück-Haltevorrichtung an einem horizontal schwenkbaren Gestell und eine Stellvorrichtung hierfür. Die Stellvorrichtung hat Druckluftzylinder als Antriebe zum Spannen bzw. Anpressen von Werkstück und Dichtplatte in einer Prüfstellung. In der Prüfstellung liegt das Werkstück mit seinem Anschlussbereich dicht an der Dichtungsanordnung der Dichtplatte an und wird zur Prüfung mit Druckluft beaufschlagt. Die Bauweise gemäß EP 0 122 551 A2 ist allerdings für eine vollautomatische Fertigung ungeeignet.

Ein teilautomatisches Prüfsystem - speziell für Kleinserien - ist im Patent DE 103 60 143 B4 offenbart. Ein Lecktest eines Kurbelgehäuses, speziell eines geteilten Kurbelgehäuses, beschreibt das Patent DE 102 41 368 B4.

Eine gattungsgemäße Lecktestmaschine und eine vollautomatische Anlage zur Dichtheitsprüfung jüngerer Generation sind aus dem Patent EP 1 333 266 B1 vorbekannt, welches den nächstliegenden Stand der Technik darstellt. Die Lecktestmaschine nach EP 1 333 266 B1 ist für einen Zylinderkopf, einen Motorblock oder ein ähnliches industriell gefertigtes Werkstück mit einem auf Dichtheit zu prüfenden Innenraum geeignet. Sie hat eine untere Dichtplatte sowie seitlich und von oben zu geschwenkte Dichtstempel, jeweils mit einer Dichtungsanordnung passend zum offenen Verbindungs- bzw. Anschlussbereich des Werkstücks, der abzudichten ist. Am Anschlussbereich ist im Fertigzustand ein weiteres Bauteil angeschlossen. Am Maschinengestell ist eine verschieblich gelagerte Werkstück-Haltevorrichtung vorgesehen. Eine Stellvorrichtung zum Zusammenbringen von Werkstück und Dichtplatte umfasst u.a. eine Hubeinrichtung mit Hubzylindern zum Hochfahren der unteren Dichtplatte gegen das Werkstück sowie weitere Antriebe für die Dichtstempel. Die Stellvorrichtung stellt damit Dichtplatte und -stempel in eine Prüfstellung, in welcher das Werkstück mit seinem Anschlussbereich dichtend an der Dichtungsanordnung der Dichtplatte anliegt.

Zur erhöhten Verfügbarkeit und gleichzeitiger Verringerung von vermeidbarem Ausschuss werden anlagentechnisch in EP 1 333 266 B1 jeweils für jeden Werkstücktyp mindestens zwei gleichartige Lecktestmaschinen vorgesehen. Die zweite Maschine testet redundant. Dies dient der Bestätigung einer Undichtigkeit oder aber zur Wartung der Dichtungsanordnung an der fehleranzeigenden Maschine, falls nur einer aus zwei Tests negativ ist. Zur Verfügbarkeit der Anlage kann bei Wartung einer Maschine mit Dichtungsdefekt eine dritte identische Maschine in Betrieb genommen werden.

Im Patent EP 1 333 266 B1 wird zur Anlagentechnik ferner vorgeschlagen, für jeden Werkstücktyp eine entsprechende Lecktestmaschine einzusetzen - was dem derzeitigen Stand der Technik entspricht. Zur Umsetzung der dortigen Erfindung wäre allerdings für jeden Werkstücktyp ein Satz redundanter Lecktestmaschinen vorzusehen, d.h. für jeden Werkstücktyp mindestens zwei, vorzugsweise drei Lecktestmaschinen.

Insbesondere bei sich derzeit verbreitenden hochflexiblen Fertigungssystemen, zur Fertigung z.B. unterschiedlicher Großserien-Motoren und deren Varianten ohne Einschränkungen oder zeitaufwendige Umrüstung, wird eine erhebliche Anzahl von werkstücktyp- und damit motorabhängigen Lecktestmaschinen benötigt. Entsprechendes gilt auch ohne hochflexible Fertigung, wenn z.B. auf ein und derselben Fertigungslinie sog. Baukastenmotoren, bedarfsweise als Drei-, Vier-, und SechsZylinder-Reihenmotor, ohne Umrüstung hergestellt werden sollen. Damit geht ein entsprechender Aufwand einher zur Herstellung, Installation, Steuerung, Wartung, etc. und großer Stellflächenbedarf.

Es ist mithin gegenüber der Lehre aus EP 1 333 266 B1 ein Ziel der vorliegenden Erfindung, eine mit reduziertem Aufwand, insbesondere mit geringeren Herstellkosten, verbundene Lösung zur Dichtheitsprüfung mehrerer unterschiedlicher Werkstücktypen anzubieten, insbesondere für verschiedene Bauarten der gleichen Gattung, wie z.B. der Gattung Zylinderkopf oder der Gattung Motorblock bzw. Kurbelgehäuse.

Als nächstliegender Stand der Technik wird hingegen eine Lecktestmaschine gemäß dem Patent EP 1 014 068 B1 betrachtet. Diese Maschine entspricht dem Oberbegriff aus Anspruch 1. Sie hat eine Wechselvorrichtung für verschiedene Dichtplatten, mit einer am Maschinengestell verstellbaren Halteanordnung mit zugeordnetem Antrieb für den bedarfsweisen Wechsel der Dichtplatte. Eine von mehreren adapterartigen Dichtplatten wird damit aus einer Wartestellung in eine Betriebsstellung genommen und umgekehrt. Im Ausführungsbeispiel aus EP 1 014 068 B1 hat die Halteanordnung z.B. vier Dichtplattenadapter an jeweils einer gemeinsamen Tragplatte, die drehbar am Maschinengestell gelagert ist. Die Maschine kann so für bis zu vier Werkstücktypen eingesetzt werden. Nachteilig ist jedoch, dass diese Maschine stets nur ein Werkstück nach dem anderen aufnimmt, prüft und wieder freigibt.

Ausgehend vom nächstliegenden Stand der Technik ist es Aufgabe der vorliegenden Erfindung, bei einer Lecktestmaschine den Durchsatz zur erhöhen bzw. die Taktzeit zur verkürzen. Dies wird erreicht durch eine Lecktestmaschine nach Anspruch 1 bzw. deren Verwendung zur Dichtheitsprüfung nach Anspruch 18.

Eine weitere Aufgabe kann darin gesehen werden, eine verbesserte Anlagen- und Verfahrenstechnik für die hochflexible Fertigung bereitzustellen. Dies erreicht eine Anlage nach Anspruch 12 .

### ALLGEMEINE BESCHREIBUNG DER ERFINDUNG

Eine gattungsgemäße Lecktestmaschine ist zur Dichtheitsprüfung eines Zylinderkopfes, eines Motorblocks oder eines ähnlichen industriell gefertigten Werkstücks mit mindestens einem oder mehreren auf Dichtheit zu prüfenden Innenräumen bzw. Druckräumen bestimmt. Unter Maschine wird dabei insbesondere eine bedarfsweise getrennt bzw. als Einheit einsetzbare Einrichtung verstanden, die typisch einer einzelnen Anlagenstation entspricht. Die Lecktestmaschine umfasst mindestens eine Dichtplatte bzw. Abdichteinheit mit einer Dichtungsanordnung passend zum zu prüfenden Werkstück. Am Maschinengestell (Summe der tragenden Teile) der Lecktestmaschine ist mindestens eine Werkstück-Haltevorrichtung für das Werkstück vorgesehen. Die Haltevorrichtung kann am Maschinengestell ortsfest oder beweglich gelagert sein.

Die Lecktestmaschine hat eine Stellvorrichtung mit zumindest einem ersten Antrieb zum Zusammenbringen von Werkstück und Dichtplatte in eine Prüfstellung (Fachbegriff: Zustellen). Dies erfolgt durch Relativbewegung nur eines Teils oder beider Teile zueinander. In der Prüfstellung liegt das Werkstück mit seinem Anschlussbereich dichtend an der Dichtungsanordnung der Dichtplatte an, damit eine Dichtheitsprüfung eines Innenraums durchgeführt werden kann. Der Begriff Dichtplatte ist funktional zu verstehen im Sinne einer Abdichteinheit, ggf. auch ohne Grundplatte, zum vorübergehend gasdichten Schließen eines nach außen offenen Anschlussbereichs in Bezug auf einen Innenraum. Die Dichtplatte ist ein rein zum Prüfen verwendeter Verschluss und in der Gestaltung vom Werkstück abhängig bzw. an dieses angepasst.

Zur Lösung der erstgenannten Aufgabe sieht die Erfindung eine Drehvorrichtung am Maschinengestell vor, welche die mindestens eine Werkstück-Haltevorrichtung sowie einen zugeordneten Antrieb aufweist, um das Werkstück aus einer Ladestellung zum Be- und Entladen der Lecktestmaschine in eine Grundstellung vor die Prüfstellung bzw. in die Prüfstellung zu nehmen und umgekehrt.

In bevorzugter Ausführungsform ist vorgesehen dass, die Lecktestmaschine zum Austausch einer in der Prüfstellung nutzbaren Dichtplatte mit einer integrierten Wechselvorrichtung (soz. ein "integrierter Dichtplattenwechsler") für Dichtplatten auszurüsten, die mit mindestens zwei Dichtplatten bestückt werden kann.

Hierzu kann eine am Maschinengestell verstellbar gelagerte Halteanordnung vorgesehen werden, welche mindestens zwei Halterungen zur Bestückung mit jeweils einer Dichtplatte und mindestens einen der Wechselvorrichtung zugeordneten zweiten Antrieb umfasst. Dies erlaubt es bedarfsweise, eine Halterung mit Dichtplatte aus einer Wartestellung in eine Betriebsstellung zu nehmen und umgekehrt, d.h. diese Halterung mit Dichtplatte aus der Betriebsstellung in die Wartestellung zu nehmen. Hierbei ist die Betriebsstellung der Prüfstellung zugeordnet, d.h. mit dieser identisch bzw. übereinstimmend oder dieser zugewandt (proximal), je nachdem ob und ggf. wie die Dichtplatte von der Stellvorrichtung bewegt wird. Die Wartestellung der bzw. jeder nicht in Betriebsstellung befindlichen Dichtplatte bzw. Halterung kann mit Bezug auf die Prüfstellung abgewandt bzw. entfernt (distal) sein und ist jedenfalls von der Betriebsstellung verschieden. Als Antrieb kommen elektromechanische, pneumatische oder hydraulische Antriebe in Betracht, direkt oder über ein Getriebe. Bevorzugt hat die Wechselvorrichtung mindestens einen Antrieb mit elektrischem Servo- oder Schrittmotor.

Die Lecktestmaschine ist in Betriebsbereitschaft mit mindestens zwei gegeneinander auswechselbaren Dichtplatten an der Halteanordnung bestückt, damit anhand der Wechselvorrichtung ein schneller Wechsel ggf. vollautomatisch vollzogen werden kann.

So kann ein und dieselbe Lecktestmaschine ohne Umrüstung für mindestens zwei, vorzugsweise für eine Mehrzahl von WerkstückTypen eingesetzt werden. Das erfindungsgemäße Konzept reduziert so den Herstellungsaufwand und baut kompakt, d.h. reduziert auch die erforderliche Stellfläche. Es ist nicht mehr für jeden Typ eine dedizierte Maschine nötig. Durch die integrierte Wechselvorrichtung wird - trotz Gesamtkostensenkung - gesteigerte Modularität und Flexibilität hinsichtlich der zu prüfenden Bauteile ermöglicht. Die erfindungsgemäße Lösung erleichtert nicht nur das Nach- bzw. Umrüsten bei Veränderung der Werkstücke, z.B. bei Weiterentwicklung des zu fertigenden Motors, sondern erlaubt insoweit auch eine gemischte Vorserien- und Groß-Serienproduktion mehrerer Varianten bzw. Generationen eines Werkstücks ohne Unterbrechung zur Umrüstung.

Optional kann - ohne Mehraufwand - Ausfallzeit bei Wartung einer Dichtplatte vermieden werden, indem unterbrechungsfrei eine identische Reserve-Dichtplatte in Betrieb genommen wird.

Die Erfindung nutzt auch die überraschend einfache Erkenntnis, dass begrenzter Mehraufwand an einer Maschine, der mit Zusatzbauteilen zur Bereitstellung einer Dichtplatten-Wechselvorrichtung einhergeht, eine diesen Mehraufwand mehrfach übersteigende Systemkostensenkung durch Mehrfachnutzung der sonstigen Komponenten der Lecktestmaschine erlaubt. Durch den integrierten Dichtplattenwechsel werden nicht nur Systembestandteile mehrfach genutzt, sondern auch Abläufe zusammengefasst. Die Erfindung erlaubt ein schlankeres Konzept der Anlage insgesamt aufgrund der zahlenmäßigen Reduzierung der Prüfstationen. Damit wird auch Aufwand der Elektro- und Informationstechnik, z.B. bei Anlagen-Steuerung in Soft- und Hardware, der Robotik und ggf. auch der Fördertechnik verringert. Auch der Grundverbrauch an Energie wird reduziert. Die Einsparung kann sich in einer Anlage mit einer Vielzahl Maschinen mit n-fach-Wechselvorrichtung dem Faktor n annähern.

Die vorgeschlagene Lecktestmaschine ist allgemein für Einzelteile von Brennkraftmaschinen und speziell für die Komponenten von Diesel- und Ottomotoren geeignet, insbesondere zum Prüfen eines Zylinderkopfes, eines Motorblocks oder eines Kurbelgehäuses. Die Maschine bzw. damit ausgerüstete Anlage ist zudem besonders geeignet für Fertigungslinien zur vernetzten hochflexiblen und ggf. zur sog. "chaotischen" Produktion. Selbstverständlich können mehrere solche Lecktestmaschinen in einer Anlage genutzt werden, wobei die Anlage z.B. mit nur zwei Maschinen und 4-fach-Dichtplatten-Wechsler bis zu acht verschiedene Werkstücktypen prüfen kann, wohingegen bisher eine Anlage mit acht Einzelmaschinen benötigt wurde. Gegebenenfalls können anhand der Wechselvorrichtung auch verschiedene Druckräume eines Werkstücktyps mit geringerem Aufwand geprüft werden, falls diese nicht durch eine einzige Dichtplatte erfassbar wären.

In einer bevorzugten Ausführungsform hat die Halteanordnung einen gemeinsamen Tragkörper, beispielsweise in der Art einer Grundplatte, an welchem die mindestens zwei, vorzugsweise vier, Halterungen vorgesehen sind und welcher verstellbar am Maschinengestell gelagert ist. So kann die Wechselvorrichtung mit nur einem einzigen zweiten Antrieb betätigt werden. Der gemeinsame Tragkörper ist eine träger- bzw. halterartige Konstruktion die ein- oder mehrteilig sein kann. Alternativ hierzu müsste die Halteanordnung ohne gemeinsamen Tragkörper für jede Dichtplatte eine unabhängig am Maschinengestell verstellbar gelagerte Halterung aufweisen, was jedoch mehrere Antriebe oder ein aufwendiges Schaltgetriebe erfordert. Die Halterungen wirken jeweils als Halter für genau eine Dichtplatte und können hierbei jede geeignete Bauweise haben, um die Dichtplatte zu befestigten und ggf. entnehmbar zu halten. Eine Entnahme der Dichtplatte aus ihrer Halterung zwecks Zustellen in die Betriebsstellung ist möglich aber nicht zwingend.

In einer Weiterbildung mit gemeinsamem Tragkörper ist dieser schwenkbar am Maschinengestell gelagert, insbesondere um eine vertikale Achse schwenkbar. So kann jede Dichtplatte an der entsprechenden Halterung drehteller-, karussell- bzw. revolverartig durch Schwenken um die Achse in die Betriebsstellung bzw. aus dieser genommen werden. Hierdurch lässt sich eine Vielzahl von Halterungen unterbringen. Zum Dichtplatten-Austausch ist auch eine linear oder kurvilinear angetriebene Halteanordnung denkbar. Bei vertikaler Schwenkachse kann zum Zustellen insbesondere die Dichtplatte vertikal von oben oder von unten auf das Werkstück gebracht werden, was eine kompakte Bauweise erlaubt. In bevorzugter Gestaltung hat der schwenkbare Tragkörper vier oder mehr über den Umfang verteilte, insbesondere in gleichem Winkelabstand verteilte, Halterungen für jeweils eine Dichtplatte. Besonders, aber nicht nur in Verbindung mit einem karussellartig schwenkbaren Tragkörper, sind eine Vielzahl Halterungen kompakt, z.B. stern- oder polygonartig verteilt realisierbar.

Gemäß einem Aspekt der Erfindung , kann eine gattungsgemäße Lecktestmaschine bereits dadurch optimiert werden, dass ein Rundtakttisch am Maschinengestell gelagert ist und mindestens eine, vorzugsweise zwei oder mehr Werkstück-Haltevorrichtungen sowie einen eigenen, zugeordneten Antrieb aufweist. Der Rundtakttisch kann das Werkstück aus einer Ladestellung in eine Grundstellung vor die Prüfstellung, oder unmittelbar in die Prüfstellung nehmen und umgekehrt. Hierbei dient eine gesonderte Ladestellung zum Be- und Entladen der Lecktestmaschine. Es kann deshalb ein weiteres Werkstück in die bzw. aus der Lecktestmaschine genommen werden, während ein zuvor geladenes Werkstück noch der Dichtheitsprüfung unterzogen wird. Dadurch lassen sich geringere Taktzeiten und höhere Produktivität erreichen. Als Rundtakttische werden hier allgemein auch Rundtische oder Rundschalttische verstanden. Derartige Drehvorrichtungen ermöglichen getaktete und/oder kontinuierliche Bauteilbewegung in einer Kreisbahn. Die hier bevorzugte Taktung in Winkelschritten (d.h. keine freie Positionierung) wird dabei anhand der Steuerung der Lecktestmaschine und z.B. mit einem Drehwinkelgeber am Antrieb realisiert. Grundsätzlich ist ein Rundtakttisch mit nur zwei um 180° winkelversetzten

Haltevorrichtungen für je ein Werkstück ausreichend. Diese Weiterentwicklung wird unabhängig als erfindungserheblich angesehen, ist aber auch in Kombination mit der Wechselvorrichtung vorteilhaft, da während dem Austauschen des neu geladenen und bereits geprüften Werkstücks durch den Rundtakttisch ohne nennenswerten Zeitverlust zeitgleich die Dichtplatten gewechselt werden können.

Ungeachtet der Beladung der Maschine, aber insbesondere bei Verwendung des Rundtakttischs mit vertikaler Mittelkonsole, kann die Stellvorrichtung als Vertikalhubvorrichtung jeweils eine vertikale Linearführung für jede Werkstück-Haltevorrichtung aufweisen, z.B. an der Mittelkonsole, und als ersten Antrieb einen Hubantrieb zum Zustellen einer Werkstück-Haltevorrichtung mit Werkstück aus einer Grundstellung in die Prüfstellung und/oder zum Anpressen des Werkstücks an einer zugestellten Dichtplatte umfassen. Die Dichtplatte kann hierbei ggf. nur den Freiheitsgrad des Wechslers aufweisen, d.h. das Werkstück allein wird zur Dichtplatte zugestellt. Die Dichtplatte kann alternativ mit einem weiteren Freiheitsgrad zum Zustellen aus der Betriebsstellung in eine Betriebsstellung beweglich an der Halterung oder mit dieser beweglich gelagert sein.

In bevorzugter Ausführungsform hat bei mindestens einer Wechselvorrichtung (vgl. unten) jede Halterung einen lösbaren Dichtplattenadapter, der insbesondere vertikal lösbar gehalten sein kann. Dadurch wird eine einheitliche Schnittstelle für alle Dichtplatten zu den weiteren Teilen der Wechselvorrichtung ermöglicht. Mittels Dichtplattenadapter wird dann jede Dichtplatte an der Halterung angebracht. Bevorzugt verriegelt die Dichtplatte am Adapter. Jeder Dichtplattenadapter kann wiederum modular und mit einheitlicher Schnittstelle mit der Stellvorrichtung, insbesondere einem weiteren Hubantrieb, zusammenwirken. So kann eine Dichtplatte mitsamt Dichtplattenadapter aus der Betriebsstellung (bzw. einer vorgelagerten Bereitschaftsstellung) in die Prüfstellung zugestellt werden und/oder ein Anpressen dieser Dichtplatte an das Werkstück erfolgen.

Antriebstechnisch bevorzugt werden für die Stellvorrichtung Hydraulikzylinder als Hubantriebe, und für den zur Wechselvorrichtung genannten zugeordneten zweiten Antrieb, ein mit einer Anlagensteuerung verbundener elektrischer Servo- oder Schrittmotor zum Betätigen des Tragkörpers, vorzugsweise über ein Getriebe. Der Elektromotor kann insbesondere über ein Schneckengetriebe einen Zahnriemen antreiben, der mit einem umlaufenden Zahnkranz am Tragkörper zusammenwirkt. Ähnlich wie bei einem Rundtakttisch kommen auch Stirnrad-, Scheibenkurvengetriebe, oder - für die bevorzugt fest vorgegebenen n Winkelschritte für n austauschbare Dichteinheiten - Malteserkreuzgetriebe in Betracht. Besonders zur Dichtheitsprüfung eines Motorblocks, eines Kurbelgehäuses oder sonstigen Bauteils, insbesondere für die Motorenfertigung, mit zwei voneinander abgewandt liegenden Anschlussbereichen ist es vorteilhaft, wenn die Lecktestmaschine jeweils für jeden der beiden Anschlussbereiche des Werkstücks eine Dichtplatte, d.h. einen Satz aus zwei Dichtplatten, umfasst. Dementsprechend hat die Lecktestmaschine in diesem Fall bevorzugt auch zwei integrierte Wechselvorrichtungen für Dichtplatten. Diese können so angeordnet sein, dass sich die Dichtplatten in Bezug auf ein aufgenommenes Werkstück gegenüberliegen und das Werkstück sandwichartig umklammern können. Hierzu kann insbesondere eine Wechselvorrichtung am Maschinengestell unterhalb der Werkstück-Haltevorrichtung und die weitere Wechselvorrichtung am Maschinengestell oberhalb der Werkstück-Haltevorrichtung angeordnet sein. Besonders in Verbindung mit einer Anordnung mit drehtellerartig gelagerten Tragkörpern lässt sich so trotz der Wechselvorrichtungen eine kompakte Bauweise mit geringer Stellfläche realisieren.

Für eine kompakte Bauweise mit zwei Dichtplatten-Wechslern ist es günstig, wenn die untere Dichtplatte aus ihrer Betriebsstellung durch eine Hubeinrichtung vertikal von unten und ggf. zusammen mit dem vertikal geführten Werkstück an die in Vertikalrichtung unbewegliche obere Dichtplatte angeführt und angepresst wird. Hierzu ist auch der karussellartig schwenkbare Tragkörper für beide Wechsler vorteilhaft. Die Wechselvorrichtungen können jeweils einen eigenen Antrieb oder einen gemeinsamen Antrieb zum Synchronlauf aufweisen.

Die zweite Wechselvorrichtung kann vom Aufbau weitgehend analog zur Ersten ausgeführt sein. Sie kann eine weitere, am Maschinengestell verstellbar gelagerte Halteanordnung umfassen mit mindestens zwei oder mehr Halterungen für jeweils eine Dichtplatte und mit einem zugeordneten eigenen oder vierten Antrieb. Auch der zweite Dichtplattenwechsler dient dazu, eine Halterung mit Dichtplatte aus einer Wartestellung in eine der Prüfstellung zugeordnete Betriebsstellung zu nehmen und umgekehrt. In einer praxisgerechten Anordnung wird die weitere Halteanordnung im zweiten Wechsler in Betriebsstellung die zweite Dichtplatte gegenüberliegend der ersten Dichtplatte am ersten Wechsler halten. Jede Wechselvorrichtung ist vorzugsweise mit mindestens zwei unterschiedlichen Dichtplatten korrespondierend zu zwei Werkstücktypen bestückt, wobei die Wechselvorrichtung bevorzugt zur Bestückung mit vier oder mehr Dichtplatten ausgerüstet ist.

Dementsprechend kann jede Halteanordnung zwei, drei, insbesondere vier oder mehr Halterungen für jeweils eine Dichtplatte umfassen, welche z.B. gleichverteilt bzw. um die Schwenkachse winkelversetzt angeordnet sind.

Die Dichtplatte ist speziell passend zum Anschlussbereich des Werkstücks gestaltet. Sie kann dabei z.B. eine Anordnung als Einheit zustellbarer Dichtungen, Dichtstempel, oder dgl. umfassen oder einen komplexeren Aufbau mit integrierter Anpressvorrichtung aufweisen (z.B. nach Gebrauchsmuster DE 202 16 543 U1).

Zur Vermeidung von Bedienfehlern und Beschädigungen ist es vorteilhaft, wenn jede Halterung einen speziell zu genau einem Dichtplattentyp passenden, d.h. eineindeutigen Verwechslungsschutz aufweist. Hierzu kann insbesondere eine mit einem Dichtplattenadapter Codier-Stift/Aufnahme-Kombination vorgesehen sein oder ein gleichwertiger Arretier-Schutz, der ein Anbringen je nur eines Dichtplattentyps bzw. nur eines bestimmten Adapters an einer bestimmten Halterung erlaubt. Ein Verwechslungsschutz kann analog auch zwischen Dichtplattenadapter und der Dichtplatte selbst vorgesehen werden.

In einer typischen Ausführung hat jede Dichtplatte eine Grundplatte mit Dichtungsanordnung. Es kann ferner mindestens ein Prüfanschluss für eine gasdicht mit dem Innenraum des Werkstücks zu verbindende Prüfvorrichtung an jeder Dichtplatte des Wechslers vorgesehen sein. Die Prüfvorrichtung ist zur Differenzdruck- oder Volumenstrommessung leitungstechnisch mit dem Prüfanschluss verbunden und beaufschlagt den zu prüfenden Innenraum. Wenn möglich, wird der Prüfanschluss jedoch nicht an den Dichtplatten des Wechslers, sondern separat z.B. an einem zusätzlichen Dichtstempel oder dgl. angeordnet.

In konventioneller Bauweise werden bedarfsweise zusätzlich zu der bzw. den Dichtplatten, typisch quer zur Wirkrichtung der Stellvorrichtung, insbesondere schräg und oder seitlich, dem Werkstück zustellbare Dichtstempel oder kleinere Dichtplatten für weitere zum Test abzudichtende Öffnungen zum Innenraum des Werkstücks vorgesehen. Diese sind durch entsprechende Zustellmechanik und/oder Zustellantriebe am Maschinengestell automatisch betätigbar angeordnet, z.B. pneumatisch linearverschiebbar angetrieben.

In Verbindung mit einer Wechselvorrichtung, insbesondere bei zwei Wechselvorrichtungen, kann die Maschine kleiner bauen, wenn die weiteren Dichtstempel bzw. zusätzlichen Dichtplatten aus dem Fahrbereich der Wechselvorrichtung(en) heraus in eine Parkposition und zurück in eine Betriebsposition fahrbar sind.

Die Erfindung betrifft ferner auch eine Anlage zur teil- oder vollautomatischen Dichtheitsprüfung für industriell gefertigte Werkstücke mit zu prüfendem Innenraum, insbesondere für Zylinderköpfe oder Motorblöcke, mit mindestens einer Lecktestmaschine, insbesondere mit mehreren Lecktestmaschinen, nach einem der oben beschriebenen Ausführungsformen. Die realisierbaren Einsparungen und die Produktionsflexibilität skalieren mit der Anzahl der eingesetzten Maschinen mit dem erfindungsgemäßen mehrfach Dichtplattenwechsler.

Zur Steigerung des Automatisierungsgrads ist die Anlagen- bzw. Maschinensteuerung dabei so zu gestalten, dass diese - zu jeder Lecktestmaschine - jede Wechselvorrichtung, insbesondere deren Antrieb, steuert, um eine zum Werkstück passende Dichtplatte automatisch in Betriebsstellung zu nehmen.

Hierzu ist die Anlagensteuerung vorteilhaft mit einer Erkennungsvorrichtung zur Typerkennung des als nächstes zu beladenden Werkstücks verbunden. Dementsprechend wird die Wechselvorrichtung in Funktion der Werkstückerkennung gesteuert und nimmt die jeweils passende Dichtplatte automatisch in Betriebsstellung.

Die Wechselvorrichtung selbst hat dabei vorzugsweise einen oder mehrere Geber, z.B. Positionsgeber zur Rückkopplung der aktuellen Stellung der Halteanordnung, über welche die Steuerung die Einstellung der Wechselvorrichtung hinsichtlich der in Betriebsstellung befindlichen Dichtplatte erfasst. Die Steuerung hat zur Dichtplattenpositionierung einen Regelkreis oder eine offene Steuerkette.

Eine vollautomatische Anlage weist einen Industrieroboter auf zur automatischen Werkstückhandhabung, einschließlich dem Be- und Entladen, der Werkstück-Haltevorrichtung(n) mit einem Werkstück. Der Industrieroboter wird bevorzugt von der Anlagensteuerung gesteuert, welche auch die Wechselvorrichtung(en) steuert.

Zur weiteren Automatisierung kann eine rechnergestützte Messvorrichtung zur Differenzdruck- oder Volumenstrommessung als Prüfvorrichtung vorgesehen sein, welche zur automatischen Dichtheitsprüfung ebenfalls in die Anlagensteuerung integriert sein kann.

Zur Steigerung des Automatisierungsgrads steuert die Anlagensteuerung sowohl die Dichtplattenwechsler als auch, zwecks vollautomatischer Dichtheitsprüfung, die Messvorrichtung und/oder zur vollautomatischen Werkstückhandhabung den Industrieroboter und ist dementsprechend mit diesen Anlagenkomponenten verbunden.

Die Erfindung betrifft auch die industrielle Verwendung einer Lecktestmaschine oder einer Anlage, nach einem der vorstehend beschriebenen Ausführungsbeispiele zum Zwecke der Dichtheitsprüfung eines industriell gefertigten Werkstücks mit zu prüfendem Innenraum, insbesondere eines Zylinderkopfes oder eines Motorblocks. Die Verwendung kann neben der werkstückbezogenen Flexibilität vorzugsweise umfassen, dass die Wechselvorrichtung eine als defekt bzw. als auszutauschend erkannte Dichtplatte aus der Betriebsstellung in die Wartestellung nimmt bzw. in eine gesonderte Wartungsstellung. Die Erkennung kann dabei anhand der Prüfergebnisse oder durch Daten zur prädiktiven Wartung beruhen. Zugleich kann eine bereits an einer Halterung des Wechslers angebrachte Reserve-Dichtplatte in Betriebsbereitschaft bzw. in Betrieb genommen werden. Somit kann die Wechselvorrichtung auch zur Reduzierung von wartungsbedingen Auszeiten ausgenutzt bzw. eingesetzt werden.

Die Erfindung betrifft schließlich auch ein Verfahren zur industriellen Dichtheitsprüfung mit automatischem Wechsel der Dichtplatte. Hierbei wird eine Lecktestmaschine mit einem Zylinderkopf, einem Motorblock oder dgl. als zu prüfendem Werkstück beladen. In geeigneter Weise erfolgt ein Zustellen bzw. Zusammenbringen des Werkstücks und einer Dichtplatte in eine Prüfstellung, in welcher das Werkstück mit dem Anschlussbereich dichtend an einer Dichtungsanordnung der Dichtplatte anliegt und durch eine geeignete Messvorrichtung geprüft wird.

Ein erfindungsgemäßes Verfahren zeichnet sich aus durch einen automatischen Wechsel der Dichtplatte anhand einer in die Lecktestmaschine integrierten Wechselvorrichtung mit mindestens zwei Dichtplatten, wobei die Lecktestmaschine, vor dem Zusammenbringen von Werkstück und Dichtplatte in die Prüfstellung, bedarfsweise eine zum Werkstück passende Dichtplatte aus einer Wartestellung in eine der Prüfstellung zugeordnete Betriebsstellung nimmt, sofern nicht bereits die passende Dichtplatte in Betriebsstellung ist. Der Wechsel kann insbesondere automatisch, z.B. gestützt durch eine Anlagensteuerung mit Werkstückerkennung, erfolgen.

Weitere bevorzugte Verwendungs- und Verfahrensaspekte ergeben sich aus den weiter oben beschriebenen Merkmalen.

### KURZE BESCHREIBUNG DER FIGUREN

Weitere Einzelheiten und Vorteile der Erfindung können der nachfolgenden ausführlichen Beschreibung rein beispielhafter Ausführungsformen der Erfindung (ohne Beschränkung des Schutzumfangs) anhand der beiliegenden Zeichnungen entnommen werden. Diese zeigen:
- FIG.1:: ein Prinzipschema einer Anlage mit zwei Lecktestmaschinen zur vollautomatischen Dichtheitsprüfung von Werkstücken, hier von Motorblöcken, einem Industrieroboter und einem Blockschaltbild der Anlagensteuerung;
- FIG.2A:: eine Seitenansicht einer erfindungsgemäßen Lecktestmaschine für Zylinderköpfe;
- FIG.2B:: eine perspektivische Teilansicht der unteren Wechselvorrichtung zum Dichtplattenwechsel aus FIG.2A, zur Veranschaulichung des Antriebs;
- FIG.3:: eine perspektivische Teilansicht einer erfindungsgemäßen Lecktestmaschine für Zylinderköpfe im Vertikalschnitt; und
- FIG.4:: eine Teilansicht in vertikalem Halbschnitt der Lecktestmaschine aus FIG.3, in welchem ein Zylinderkopf an einer oberen Dichtplatte anliegt, bevor eine untere Dichtplatte in die Prüfstellung zugestellt ist.

### DETAILLIERTE BEISPIELBESCHREIBUNG ANHAND DER FIGUREN

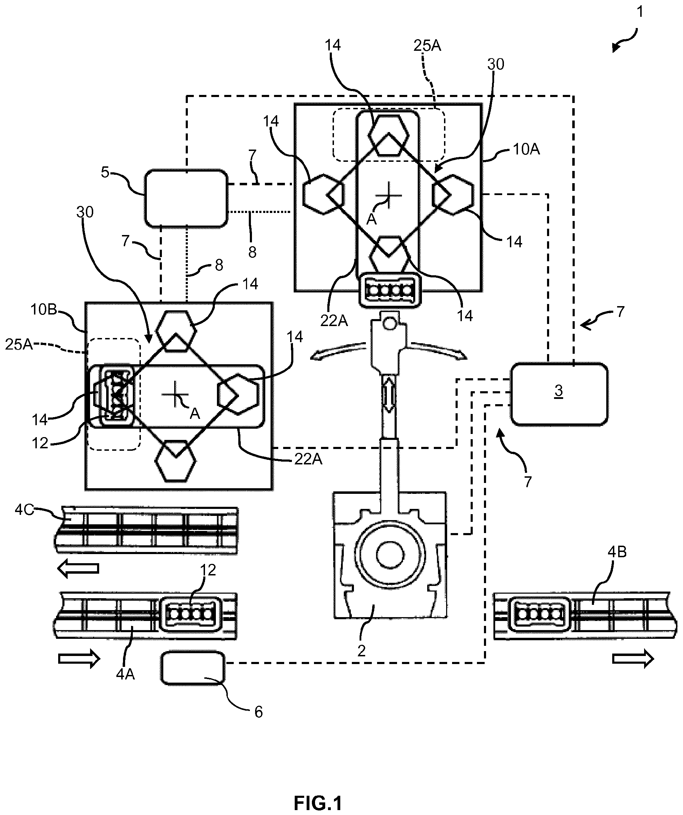

FIG.1 zeigt eine Anlage, allgemein mit Bezugszeichen 1 bezeichnet, mit einem Industrieroboter 2 der über eine Anlagensteuerung 3 gesteuert wird. Der Industrieroboter 2 ist hierzu über einen Feldbus oder Industrie-Bus 7 zur Signalübertragung von Steuerungs-und Informationssignalen mit der Anlagensteuerung 3 verbunden. Die Anlage 1 dient zur vollautomatischen Dichtheitsprüfung von Werkstücken, in FIG.1 beispielsweise von Motorblöcken 12.

Hierzu entnimmt der Industrieroboter 2 von einer aus der vorgelagerten Produktion einer Fertigungslinie zuführenden Förderstrecke 4A die Motorblöcke 12 einzeln und gibt diese in eine von mehreren (hier rein beispielhaft zwei gezeigt) Lecktestmaschinen 10A, 10B. Die Lecktestmaschinen 10A, 10B haben jeweils eine Werkstück-Haltevorrichtung 22A im Arbeitsbereich des Industrieroboters 2, um von diesem mit einem Werkstück beladen werden zu können. Die Werkstück-Haltevorrichtung 22A bringt den Motorblock 12 in geeigneter Weise in eine Prüfstellung 25A. Jede Lecktestmaschine 10A, 10B ist mit einem eigenen oder gemeinsamen rechnergestützten Test- bzw. Messgerät 5 mit an sich bekannter Bauweise verbunden über jeweils eine Schlauchleitung 8. Anhand des Messgeräts 5 wird jeweils eine zum Motorblock 12 passende Dichtplatte, hier schematisch mit 14 bezeichnet, zum Zwecke des Lecktests bzw. der Dichtheitsprüfung versorgt. Zum Lecktestkann jedes dem Fachmann bekannte Testverfahren eingesetzt werden, z.B. Differenzdruck- oder Volumenstrommessung, das es erlaubt auf Leckagen oder Undichtigkeiten in den relevanten Druck- bzw. Innenräumen des Motorblocks 12 zu prüfen.

Ein Werkstückcode-Lesegerät 6 ist zur Erkennung eines optisch lesbaren Codes (z.B. QR-Codes oder Barcodes oder dgl.), welcher zur Identifizierung auf dem Motorblock 12 vorgesehen ist, und zur Übermittlung von Typ- und ggf. Identifikationsdaten über den Industrie-Bus 7 mit der Anlagensteuerung 3 verbunden. Die Anlagensteuerung 3 nutzt die Daten und kann diese z.B. zur Qualitätssicherung verarbeiten bzw. weiterleiten. Die Anlagensteuerung 3 dokumentiert zu jedem Motorblock 12 das entsprechende Testergebnis der jeweiligen Lecktestmaschine 10A, 10B. Nach erfolgtem Lecktest entnimmt der Industrieroboter 2 den geprüften Motorblock 12 aus der jeweiligen Lecktestmaschine 10A, B. Bei erfolgreichem bzw. positivem Prüfergebnis wird der geprüfte Motorblock 12 vom Industrieroboter 2 auf eine weiterführende Fördererstrecke 4B gegeben, insbesondere zur weiterführenden Montage, z.B. zur Anfertigung des Motors. Bei negativem Prüfergebnis gibt der Industrieroboter 2 den fehlerbehafteten Motorblock 12 auf eine andere ausgehende Fördererstrecke 4C, zwecks Reparatur oder Ausschuss.

Jede der Lecktestmaschinen 10A, 10B hat erfindungsgemäß eine, in FIG.1 nur schematisch gezeigte, integrierte und automatisierte Wechselvorrichtung 30 zum bedarfsweisen Austausch der Dichtplatte 14 die in einer Prüfstellung 25A zur Dichtheitsprüfung des Motorblock 12 genutzt wird. So kann die Dichtplatte 14 in Funktion des zu prüfenden Motorblocks 12 vollautomatisch durch die Anlagensteuerung 3 gewählt bzw. ausgetauscht werden, d.h. ein flexibler Lecktest in derselben Maschine wird ermöglicht. Die Wechselvorrichtung 30 hat hierzu eine Halteanordnung mit einer entsprechenden Anzahl von Halterungen für die Dichtplatten 14, welche weiter unten beispielhaft im Detail beschrieben wird. Im gezeigten Beispiel ist die Halteanordnung der Wechselvorrichtung 30 um eine vertikale Achse A (senkrecht zur Ebene der FIG.1) wie ein Karussell schwenkbar. Hierzu wirkt die Wechselvorrichtung 30 über die Anlagensteuerung 3 mit dem an der eingehenden Förderstecke 4A vorgesehenen Werkstückcode-Lesegerät 6 zusammen. Anhand des Werkstückcode-Lesegeräts 6 identifiziert die Anlagensteuerung 3 den zu prüfenden Werkstücktyp des Motorblocks 12 und stellt dementsprechend die jeweilige flexiblen Lecktestmaschinen 10A, 10B so ein, dass die dazu passende Dichtplatte 14 vollautomatisch in die Prüfstellung 25A genommen wird.

Im Beispiel nach FIG.1 haben die Lecktestmaschinen 10A, 10B nur eine Wechselvorrichtung 30. Für bestimmte Werkstücktypen können jedoch zwei Wechselvorrichtungen in der flexiblen Lecktestmaschine vorgesehen sein.

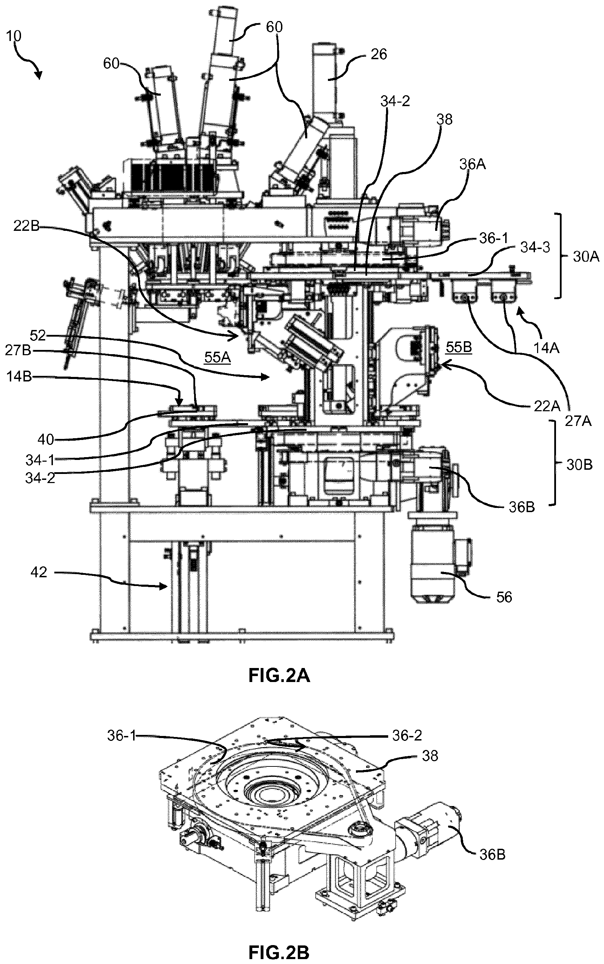

Das Ausführungsbeispiel nach FIG.2-4 betrifft rein beispielhaft eine flexible Lecktestmaschine 10, welche zur Dichtheitsprüfung von verschiedenartigen Zylinderköpfen 11 geeignet ist, beispielsweise für 3-Zylinder-, 4-Zylinder- und 6-Zylinder-Baukasten-Reihenmotoren.

Die Lecktestmaschine 10 hat ein mehrteilig zusammengesetztes Maschinengestell 20 mit einem Bodenrahmen zur ortsfesten Befestigung, z.B. am Boden der Werkshalle. Das Maschinengestell 20 bildet den Bezugspunkt und (im Sinne des Maschinenbaus) das Gestell für alle beweglichen Komponenten der Lecktestmaschine 10. Die Lecktestmaschine 10 hat zwei Werkstück-Haltevorrichtungen 22A, 22B für jeweils einen Zylinderkopf 11, wie am besten aus FIG.2A ersichtlich.

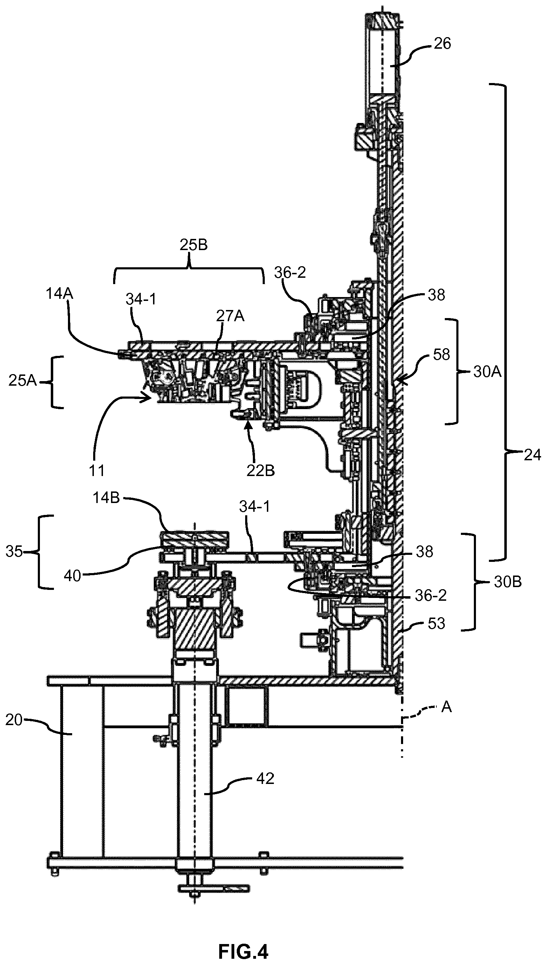

Die Lecktestmaschine 10 hat eine Stellvorrichtung, allgemein mit Bezugszeichen 24 bezeichnet, mit einem pneumatischen oder hydraulischen Hubzylinder (FIG.2B) als Antrieb 26 zum Zusammenbringen des Zylinderkopfs 11 und einer von mehreren verschiedenen oberen Dichtplatten 14A in eine Prüfstellung 25A, in welcher der Zylinderkopf 11 mit seinem motorblockseitigen ersten Anschlussbereich dichtend an einer Dichtungsanordnung 27A der oberen Dichtplatte 14 anliegen kann (FIG.4). Die Stellvorrichtung 24 ist in FIG.2-4 als Vertikalhubvorrichtung ausgeführt und hat für jede der beiden Werkstück-Haltevorrichtungen 22A, 22B jeweils eine vertikale Linearführung 58. Die Linearführung 58ist in einer vertikal erstreckten, säulenartigen Mittelkonsole 52 integriert, um den Zylinderkopf 11 mit den jeweiligen Werkstück-Haltevorrichtungen 22A, 22B in Vertikalrichtung aus einer Grundstellung 55A in die Prüfstellung 25A zu bringen, was als sog. Zustellen bezeichnet wird, und umgekehrt. Hierbei kann der Hubzylinder 26 optional auch zum teilweisen Anpressen des Zylinderkopfs 11 an die obere Dichtplatte 14A genutzt werden.

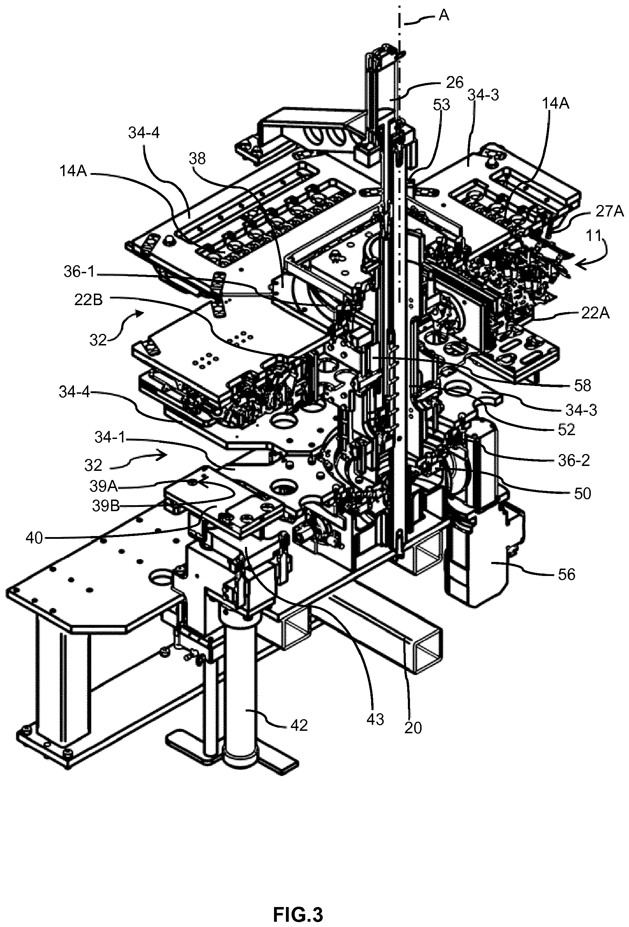

Im Beispiel nach FIG.2-4 hat die Lecktestmaschine 10 weiterhin mehrere unterschiedliche untere Dichtplatten 14B. Jede der unteren Dichtplatten 14B ist an einem vertikal lösbaren Dichtplattenadapter 40 zu Wartungszwecken austauschbar eingerastet. Durch einen weiteren vertikalen Hubantrieb 42, hier z.B. einem doppelten Hydraulikzylinder, der Stellvorrichtung 24 und einer daran abtriebsseitig befestigten Halteklaue 43 wird der Dichtplattenadapter 40 zusammen mit der unteren Dichtplatte 14B durch Zustellen aus der in FIG.3-4 gezeigten untersten Ruhestellung 35 nach oben gegen den Zylinderkopf 11 zugestellt und angepresst bzw. gespannt. Hierbei drückt die Dichtungsanordnung 27B der unteren Dichtplatte 14B gasdicht gegen den deckelseitigen zweiten Anschlussbereich des Zylinderkopfs 11. Zugleich wird eine hinreichende Anpresskraft erzeugt, um den Zylinderkopf 11 gasdicht mit seinem ersten Anschlussbereich gegen die Dichtungsanordnung 27A der oberen Dichtplatte 14A anzupressen. In dieser gasdichten Konfiguration (nur z.T. gezeigt) der Prüfstellung 25A wird der Zylinderkopf 11 dem Lecktest bzw. der Dichtheitsprüfung unterzogen. Hierbei werden anhand von zusätzlichen Dichtstempeln 60, welche automatisiert und wahlweise durch Öffnungen in der oberen Dichtplatte 14A eingeführt werden, die unterschiedlichen Innen- bzw. Druckräume ausgewählt. Weitere hier nicht gezeigte seitliche Dichtstempel und/oder kleinere Dichtplatten sind zum Abdichten sonstiger Öffnungen der Innenräume des Zylinderkopfs 11 in an sich bekannter Weise vorgesehen.

Zum teil- oder vollautomatischen Auswechseln der beiden in der Prüfstellung 25A genutzten Dichtplatten 14A, 14B hat die Lecktestmaschine 10 zwei sog. Dichtplattenwechsler bzw. Wechselvorrichtungen 30A, 30B. Die obere Wechselvorrichtung 30A und die untere Wechselvorrichtung 30B sind hierbei weitgehend nach dem gleichen Prinzip aufgebaut und umfassen jeweils eine Halteanordnung 32 für eine Mehrzahl von Dichtplatten 14A, 14B. Jede Halteanordnung 32 hat im hier gezeigten Beispiel vier Halterungen 34-1... 34-4, je für eine zugeordnete Dichtplatte 14A, 14B, wobei die Halterungen an den entsprechenden Typ der Dichtplatte 14A, 14B angepasst sind. Ferner umfasst jede Halteanordnung 32 eine viereckige Grundplatte 38 mit quadratischen Grundriss und großer Durchgangsöffnung für die Mittelkonsole 52. Die Halterungen 34-1... 34-4 sind jeweils um 90° versetzt an jeder Seite der Grundplatte 38 in Radialrichtung zur vertikalen Achse A vorstehend angeschraubt. Im gezeigten Beispiel haben nur die Halterungen der unteren Wechselvorrichtung 30B Dichtplattenadapter 40 zum schnelleren Austausch und zum Zusammenwirken mit dem Hubantrieb 42. An den Halterungen der oberen Wechselvorrichtung 30A können die nach unten gerichteten oberen Dichtplatten 14A unmittelbar angeschraubt und gesichert sein, oder (nicht gezeigte) mittels entsprechenden Adaptern lösbar angebracht sein.

Die Halteanordnungen 32 von beiden Wechselvorrichtungen 30A, 30B sind jeweils um die Vertikalachse A schwenkbar am Maschinengestell 20 gelagert, um jede der vier oberen Dichtplatten 14A, und jede der vier unteren Dichtplatten 14B wahlweise, d.h. in Abhängigkeit des zu prüfenden Werkstücks, aus einer Wartestellung in eine der Prüfstellung 25A jeweils zugeordnete Betriebsstellung 25B (FIG.4, rechts) zu bewegen und umgekehrt. Zum entsprechenden Verschwenken der Halteanordnung 32, hat jede der beiden Wechselvorrichtungen 30A, 30B einen elektrischen Servomotor 36A, 36B, der jeweils über ein Schneckengetriebe einen zugehörigen Zahnriemen 36-1 antreibt, der in einen jeweils drehfest an der Grundplatte 38 koaxial zur vertikalen Achse A befestigten Zahnkranz 36-2 greift.

Bei Betätigung der Wechselvorrichtungen 30A, 30B, die über die Anlagensteuerung (vgl. FIG.1) erfolgt, werden die zusätzlichen quer oder seitlich wirkenden Dichtstempel 60 bzw. kleineren Dichtplatten durch geeignete Vorrichtungen in Parkpositionen weggefahren bzw. erst nach Betätigung wieder zugefahren.

Zur Vermeidung von Fehlbedienungen haben die Halterungen 34-1... 34-4 und Dichtplatten 14A der oberen Wechselvorrichtung 14A jeweils einen Verwechslungsschutz, z.B. eineindeutig positionierte Codier-Stifte- 39A und entsprechende Aufnahmen 39B. Ein entsprechender Verwechslungsschutz mit Codier-Stift(en) 39A und Aufnahme 39B die zueinander passen ist an jedem Dichtplattenadapter 40 für die jeweilige untere Dichtplatte 14B vorgesehen. Analog kann auch ein Verwechslungsschutz für das Anbringen der Dichtplattenadapter 40 an den unteren Halterungen 34-1... 34-4 vorgesehen sein.

Schließlich wird ein weiterer Aspekt beschrieben. Zur Vermeidung von Verzögerungen durch Be- und Entladung, hat die Lecktestmaschine 10 - gemäß einem von dem Austausch der Dichtplatten vollkommen unabhängig verwendbaren erfindungsrelevanten Aspekt - einen Rundtakttisch 50 am Maschinengestell 20. Am Rundtakttisch 50 sind mittelbar die zwei Werkstück-Haltevorrichtungen 22A, 22B für die Werkstücke 11; 12 vorgesehen. Der Rundtakttisch 50 hat mindestens einen dritten Antrieb 56, z.B. einen Servomotor mit Schneckengetriebe, wie Figur 3-4 zeigen. Der Rundtakttisch 50 ist um die Vertikalachse A, die z.B. durch einen am Maschinengestell 20 befestigten Achsenmast 53 definiert ist, drehbar. Der Rundtakttisch 50 trägt die Mittelkonsole 52 mit den Werkstück-Haltevorrichtungen 22A, 22B, nämlich in Art einer Hohlwelle um die Vertikalachse A drehbar. Hierdurch sind die Werkstück-Haltevorrichtungen 22A, 22B gegeneinander durch 180° Drehung um die Vertikalachse A zwischen den beiden in FIG.2-3 gezeigten Positionen austauschbar. So kann die Lecktestmaschine 10 das Werkstück 11; 12 aus einer Ladestellung 55B zum Be- und Entladen der Lecktestmaschine 10 in eine Grundstellung 55A vor die Prüfstellung 25A bzw. direkt in die Prüfstellung 25A nehmen und umgekehrt. Somit kann -ohne Zeitverlust - gleichzeitig geprüft und be- bzw. entladen werden.

In bevorzugter Kombination mit Wechselvorrichtungen 30A, 30B und Rundtakttisch 50 ist der Tragkörper 38 koaxial zur Drehachse A des Rundtakttischs 50, d.h. am Achsenmast 53 mittels Wälzlagern gelagert. Hierbei kann der Tragkörper 38 der unteren Wechselvorrichtungen 30B zur Materialeinsparung unmittelbar am Aufbau des Rundtakttischs 50 schwenkbar gelagert sein (FIG.3-4).

### Bezugszeichenliste

**FIG.1**
   - 1: Anlage
   - 2: Industrieroboter
   - 3: Anlagensteuerung
   - 4A: Förderstrecke IN (Zuführung)
   - 4B: Förderstrecke OUT (Gutteile)
   - 4C: Förderstrecke OUT (Schlechtteile)
   - 5: Messgerät
   - 6: Werkstückcode-Lesegerät
   - 7: Industrie-Bus
   - 8: Schlauchleitungen
   - 10A, 10B: Lecktestmaschine
   - 12: Motorblock
   - 14: Dichtplatte
   - 22A: Werkstück-Haltevorrichtung
   - 25A: Prüfstellung
   - 30: Wechselvorrichtung
   - A: Vertikalachse
**FIG.2-4**
   - 10: Lecktestmaschine
   - 11: Zylinderkopf
   - 14A: obere Dichtplatte
   - 14B: untere Dichtplatte
   - 20: Maschinengestell
   - 22A, 22B: Werkstück-Haltevorrichtung
   - 24: Stellvorrichtung
   - 25A: Prüfstellung
   - 25B: Betriebsstellung
   - 26: erster Antrieb
   - 27A, 27B: Dichtungsanordnung

   - 30A: obere Wechselvorrichtung
   - 30B: untere Wechselvorrichtung
   - 32: Halteanordnung
   - 34-1, 34-2, 34-3, 34-4: Halterung für Dichtplatte
   - 35: Ruhestellung
   - 36A: Antrieb obere Wechselvorrichtung
   - 36B: Antrieb untere Wechselvorrichtung
   - 36-1: Zahnriemen
   - 36-2: Zahnkranz
   - 38: Tragkörper
   - 39A, 39B: Codier-Stift/-aufnahme

   - 40: Dichtplattenadapter
   - 42: Hubantrieb
   - 43: Halteklaue

   - 50: Rundtakttisch
   - 52: Mittelkonsole
   - 53: Achsmast
   - 55A: Grundstellung
   - 55B: Ladestellung
   - 56: Drehantrieb
   - 58: Linearführung
   - A: Vertikalachse

   - 60: Dichtstempel

## Patentansprüche

1. Lecktestmaschine (10) zur Dichtheitsprüfung eines Zylinderkopfes (11), eines Motorblocks (12) oder eines ähnlichen Werkstücks mit mindestens einem zu prüfenden Innenraum, umfassend:
- - mindestens eine Dichtplatte (14; 14A, 14B) mit einer Dichtungsanordnung für einen Anschlussbereich des Werkstücks;
- - ein Maschinengestell (20) mit mindestens einer Werkstück-Haltevorrichtung (22A, 22B) für das Werkstück; und
- - eine Stellvorrichtung (24) mit einem ersten Antrieb (26) zum Zusammenbringen von Werkstück (11; 12) und Dichtplatte (14; 14A, 14B) in eine Prüfstellung (25A), in welcher das Werkstück mit dem Anschlussbereich dichtend an der Dichtungsanordnung der Dichtplatte anliegt;
- und vorzugsweise umfassend eine Wechselvorrichtung (30; 30A, 30B) für Dichtplatten (14; 14A, 14B), mit einer am Maschinengestell (20) verstellbaren Halteanordnung (32) mit einem zugeordneten zweiten Antrieb (36A; 36B) für den Dichtplattenwechsel, insbesondere um eine Halterung mit Dichtplatte aus einer Wartestellung in eine der Prüfstellung (25A) zugeordnete Betriebsstellung (25B) zu nehmen und umgekehrt, wobei die Halteanordnung (32) mindestens zwei Halterungen (34-1, ... 34-4) für jeweils eine Dichtplatte und einen gemeinsamen Tragkörper (38) umfasst, welcher schwenkbar am Maschinengestell (20) gelagert ist und an welchem die mindestens zwei Halterungen (34-1, ... 34-4) vorgesehen sind;
**DADURCH GEKENNZEICHNET, DASS**
- eine Drehvorrichtung (50) am Maschinengestell vorgesehen ist, welche die mindestens eine Werkstück-Haltevorrichtung (22A, 22B) sowie einen zugeordneten dritten Antrieb (56) aufweist, um das Werkstück aus einer Ladestellung (55B) zum Be- und Entladen der Lecktestmaschine in eine Grundstellung (55A) vor die Prüfstellung bzw. in die Prüfstellung zu nehmen und umgekehrt.

2. Lecktestmaschine nach Anspruch 1, **DADURCH GEKENNZEICHNET, DASS** der Tragkörper (38) um eine vertikale Achse (A) schwenkbar am Maschinengestell gelagert ist, sodass jede Dichtplatte (14; 14A, 14B) an der entsprechenden Halterung (34-1...) durch Schwenken um die Achse (A) in die Betriebsstellung überführt (25A) bzw. aus dieser genommen wird, und/oder der Tragkörper (38) vorzugsweise vier Halterungen (34-1, 34-2, 34-3, 34-4) für jeweils eine Dichtplatte (14) aufweist.

3. Lecktestmaschine nach einem der Ansprüche 1 bis 2, insbesondere nach Anspruch 2, **DADURCH GEKENNZEICHNET, DASS** die Drehvorrichtung (50) als Rundtakttisch (50) ausgeführt ist, um das Werkstück durch getaktete Drehbewegung aus einer Ladestellung (55B) zum Be- und Entladen der Lecktestmaschine in eine Grundstellung (55A) vor die Prüfstellung bzw. in die Prüfstellung (25A) zu nehmen und umgekehrt.

4. Lecktestmaschine nach Anspruch 3, insbesondere nach Anspruch 2 und 3, **DADURCH GEKENNZEICHNET, DASS** die Halteanordnung (32), insbesondere der Tragkörper (38), koaxial zur Drehachse (A) des Rundtakttischs (50) und/oder an letzterem schwenkbar gelagert ist.

5. Lecktestmaschine nach Anspruch 4, **DADURCH GEKENNZEICHNET, DASS** der Rundtakttisch (50) eine vertikale Drehachse (A) und eine um diese drehbare, vom dritten Antrieb (56) betätigte vertikale Mittelkonsole (52) aufweist mit mindestens zwei gegenüberliegenden Werkstück-Haltevorrichtungen.

6. Lecktestmaschine nach einem der Ansprüche 1 bis 5, insbesondere nach Anspruch 5, **DADURCH GEKENNZEICHNET, DASS** die Stellvorrichtung (24) als Vertikalhubvorrichtung jeweils eine vertikale Linearführung (58) für jede Werkstück-Haltevorrichtung (22A, 22B) aufweist, insbesondere an der Mittelkonsole (52), und einen Hubantrieb als ersten Antrieb (26) zum Bewegen einer Werkstück-Haltevorrichtung mit Werkstück aus einer Grundstellung (55A) in die Prüfstellung (25A) und/oder zum Anpressen des Werkstücks an eine Dichtplatte.

7. Lecktestmaschine nach einem der Ansprüche 1 bis 6, insbesondere nach Anspruch 5 oder 6, **DADURCH GEKENNZEICHNET, DASS** jede Halterung (34-1...) einen Dichtplattenadapter (40) aufweist, mit welchem die Dichtplatte (14A, 14B) lösbar an der Halterung angebracht ist, wobei jeder Dichtplattenadapter mit der Stellvorrichtung (24), insbesondere einem weiteren Hubantrieb (42), zusammenwirkt zum Bewegen einer Dichtplatte am Dichtplattenadapter (40) aus der Betriebsstellung (25B) in die Prüfstellung (25A) und/oder zum Anpressen dieser Dichtplatte (14) an das Werkstück (11; 12).

8. Lecktestmaschine zur Dichtheitsprüfung eines Motorblocks (12) oder Kurbelgehäuses eines Verbrennungsmotors, nach einem der Ansprüche 1 bis 7, **DADURCH GEKENNZEICHNET, DASS** die Lecktestmaschine (10) für einen zu prüfenden Werkstücktyp (12) jeweils einen Satz mit zwei Dichtplatten (14A; 14B) umfasst und zwei Wechselvorrichtungen (30A, 30B) für Dichtplatten aufweist, wobei vorzugsweise die erste Wechselvorrichtung (30A) am Maschinengestell oberhalb der Werkstück-Haltevorrichtung (22A, 22B) und die zweite Wechselvorrichtung (30B) am Maschinengestell unterhalb der Werkstück-Haltevorrichtung (22A, 22B) angeordnet ist.

9. Lecktestmaschine nach Anspruch 8, **DADURCH GEKENNZEICHNET, DASS** die zweite Wechselvorrichtung (30B) eine weitere, am Maschinengestell verstellbar gelagerte Halteanordnung (32) umfasst mit mindestens zwei Halterungen (34-1...) für jeweils eine Dichtplatte(14B) und mit einem zugeordneten Antrieb (36B), um eine Halterung mit Dichtplatte aus einer Wartestellung in eine der Prüfstellung zugeordnete Betriebsstellung zu nehmen und umgekehrt.

10. Lecktestmaschine nach einem der Ansprüche 1 bis 9, **DADURCH GEKENNZEICHNET, DASS**
- jede Wechselvorrichtung mindestens zwei unterschiedliche Dichtplatten (14A, 14B) korrespondierend zu zwei Werkstücktypen umfasst; und/oder
- jede Halterung (34-1...) einen zu genau einem Dichtplattentyp passenden Verwechslungsschutz (39A, 39B) aufweist, insbesondere eine mit einem Dichtplattenadapter (40) zusammenwirkenden Arretier-Schutz, wie z.B. eine Codier-Stift/-Aufnahme-Kombination.

11. Lecktestmaschine (10) zur Dichtheitsprüfung eines Zylinderkopfes (11), eines Motorblocks (12) oder eines Kurbelgehäuses für einen Verbrennungsmotor, nach einem der Ansprüche 1 bis 10, vorzugsweise **DADURCH GEKENNZEICHNET, DASS** diese mehrere quer dem Werkstück zustellbare zusätzliche Dichtstempel (60) für weitere Öffnungen zum Innenraum des Werkstücks (11; 12) aufweist, welche aus dem Fahrbereich der Wechselvorrichtung(en) (30A, 30B) fahrbar sind.

12. Anlage (1) zur teil- oder vollautomatischen Dichtheitsprüfung für industriell gefertigte Werkstücke mit zu prüfendem Innenraum, insbesondere für Zylinderköpfe (11) oder Motorblöcke (12), **GEKENNZEICHNET DURCH**:
mindestens eine Lecktestmaschine (10; 10') nach einem der Ansprüche 1 bis 11; und
eine Steuerung (3), welche die Wechselvorrichtung bzw. die Wechselvorrichtungen (10; 10') steuert, um eine jeweils zum Werkstück passende Dichtplatte automatisch in Betriebsstellung zu nehmen.

13. Anlage nach Anspruch 12, **DADURCH GEKENNZEICHNET, DASS** die Steuerung mit einer Erkennungsvorrichtung (6) zur Typerkennung des zu beladenden Werkstücks (12) verbunden ist und dementsprechend die Wechselvorrichtung (10; 10') steuert und die passende Dichtplatte automatisch in Betriebsstellung nimmt.

14. Anlage nach Anspruch 12 oder 13, **DADURCH GEKENNZEICHNET, DASS** die Anlage
einen Industrieroboter (2) aufweist zur automatischen Werkstückhandhabung, insbesondere zum Be- und Entladen, der Werkstück-Haltevorrichtung(n) mit einem Werkstück, wobei die Steuerung (3) zur Werkstückhandhabung mit dem Industrieroboter verbunden ist.

15. Anlage nach Anspruch 12, 13 oder 14, **DADURCH GEKENNZEICHNET, DASS** die Anlage
eine rechnergestützte Messvorrichtung (5) zur Differenzdruck-oder Volumenstrommessung als Prüfvorrichtung aufweist zur automatischen Dichtheitsprüfung, wobei
die Steuerung (3) zur Dichtheitsprüfung mit der Messvorrichtung verbunden ist.

16. Lecktestmaschine (10) nach Anspruch 3, **DADURCH GEKENNZEICHNET, DASS** der dritte Antrieb (56) dem Rundtakttisch (50) zugeordnet ist, um das Werkstück aus einer Ladestellung (55B) zum Be- und Entladen der Lecktestmaschine in eine Grundstellung (55A) vor die Prüfstellung bzw. in die Prüfstellung zu nehmen und umgekehrt.

17. Lecktestmaschine (10) nach Anspruch 3, **DADURCH GEKENNZEICHNET, DASS** die Halteanordnung (32) der Wechselvorrichtung (30; 30A, 30B) koaxial zur Drehachse (A) des Rundtakttischs (50) an diesem schwenkbar gelagert ist.

18. Verwendung einer Lecktestmaschine (10; 10') oder einer Anlage (1) nach einem der vorstehenden Ansprüche 1 bis 17, zur Dichtheitsprüfung eines industriell gefertigten Werkstücks mit zu prüfendem Innenraum, insbesondere eines Zylinderkopfes (11) oder eines Motorblocks (12).

## Claims

1. A leak testing machine (10) for tightness testing of a cylinder head (11), an engine block (12) or a similar workpiece with at least one internal chamber to be tested, comprising:
- at least one sealing plate (14; 14A, 14B) with a sealing arrangement for a connection region of the workpiece;
- a machine frame (20) with at least one workpiece holding device (22A, 22B) for the workpiece; and
- an adjusting device (24) with at least one first drive (26) for bringing together workpiece (11; 12) and sealing plate (14; 14A, 14B) into a test position (25A), in which the workpiece lies with the connection region tight against the sealing arrangement of the sealing plate;
- and preferably comprising a changeover device (30; 30A, 30B) for sealing plates (14; 14A, 14B) with a holding arrangement (32) adjustable on the machine frame (20) with an associated second drive (36A; 36B) for sealing plate changeover, in particular for bringing a holder with sealing plate out of a waiting position into an operating position (25B) associated with the test position (25A) and *vice versa*, wherein the holding arrangement (32) comprises at least two holders (34-1 - 34-4) in each case for one sealing plate and a common supporting member (38), which is mounted swivelably on the machine frame (20) and on which the at least two holders (34-1 - 34-4) are provided;
**CHARACTERIZED IN THAT**
- a rotary device (50) is provided on the machine frame, which device has the at least one workpiece holding device (22A, 22B) as well as an associated third drive (56) for bringing the workpiece out of a loading position (55B) for loading and unloading the leak testing machine into a home position (55A) upstream of the test position or into the test position and vice versa.

2. The leak testing machine as claimed in claim 1, **CHARACTERIZED IN THAT** the supporting member (38) is mounted swivelably about a vertical axis (A) on the machine frame, such that each sealing plate (14; 14A, 14B) on the corresponding holder (34-1 etc.) is transferred by swiveling about the axis (A) into the operating position (25A) or brought out of said position, and/or the supporting member (38) preferably has four holders (34-1, 34-2, 34-3, 34-4) each for one sealing plate (14).

3. The leak testing machine as claimed in one of claims 1 to 2, in particular according to claim 2, **CHARACTERIZED IN THAT** the rotary device (50) takes the form of a rotary indexing table (50) for bringing the workpiece by indexed rotary motion out of a loading position (55B) for loading and unloading the leak testing machine into a home position (55A) upstream of the test position or into the test position (25A) and *vice versa.*

4. The leak testing machine as claimed in claim 3, in particular as claimed in claims 2 and 3, **CHARACTERIZED IN THAT** the holding arrangement (32), in particular the supporting member (38), is swivelably mounted coaxially with the axis of rotation (A) of the rotary indexing table (50) and/or on the latter.

5. The leak testing machine as claimed in claim 4, **CHARACTERIZED IN THAT** the rotary indexing table (50) has a vertical axis of rotation (A) and a vertical central bracket (52) rotatable thereabout and actuated by the third drive (56) and having at least two opposing workpiece holding devices.

6. The leak testing machine as claimed in one of claims 1 to 5, in particular as claimed in claim 5, **CHARACTERIZED IN THAT** the adjusting device (24) in the form of a vertical lifting device in each case has a vertical linear guide (58) for each workpiece holding device (22A, 22B), in particular on the central bracket (52), and as first drive (26) a lifting drive for moving a workpiece holding device with workpiece from a home position (55A) into the test position (25A) and/or for pressing the workpiece against a sealing plate.

7. The leak testing machine as claimed in one of claims 1 to 6, in particular as claimed in claim 5 or 6, **CHARACTERIZED IN THAT** each holder (34-1 etc.) has a sealing plate adapter (40), with which the sealing plate (14A, 14B) is attached detachably to the holder, wherein each sealing plate adapter interacts with the adjusting device (24), in particular a further lifting drive (42), to move a sealing plate on the sealing plate adapter (40) out of the operating position (25B) into the test position (25A) and/or to press this sealing plate (14) against the workpiece (11; 12).

8. The leak testing machine for tightness testing of an engine block (12) or crankcase of an internal combustion engine, as claimed in one of claims 1 to 7, **CHARACTERIZED IN THAT** the leak testing machine (10) in each case comprises a set with two sealing plates (14A; 14B) for one workpiece type (12) to be tested and has two changeover devices (30A, 30B) for sealing plates, wherein the first changeover device (30A) is preferably arranged on the machine frame above the workpiece holding device (22A, 22B) and the second changeover device (30B) is arranged on the machine frame below the workpiece holding device (22A, 22B).

9. The leak testing machine as claimed in claim 8, **CHARACTERIZED IN THAT** the second changeover device (30B) comprises a further holding arrangement (32) mounted adjustably on the machine frame and having at least two holders (34-1 etc.) in each case for one sealing plate (14B) and having an associated drive (36B) for bringing a holder with sealing plate out of a waiting position into an operating position associated with the test position and *vice versa.*

10. The leak testing machine as claimed in one of claims 1 to 9, **CHARACTERIZED IN THAT**
- each changeover device comprises at least two different sealing plates (14A, 14B) corresponding to two workpiece types; and/or
- each holder (34-1 etc.) has incorrect coupling prevention means (39A, 39B) matching precisely one sealing plate type, in particular a locking safeguard interacting with a sealing plate adapter (40), such as for example a coding pin/receptacle combination.

11. The leak testing machine (10) for tightness testing of a cylinder head (11), an engine block (12) or a crankcase for an internal combustion engine, as claimed in one of claims 1 to 10, preferably **CHARACTERIZED IN THAT** it has multiple additional sealing plungers (60) advanceable transversely of the workpiece for further openings to the internal chamber of the workpiece (11; 12), which plungers are movable out of the travel area of the changeover device(s) (30A, 30B).

12. A system (1) for partly or fully automated tightness testing for industrially produced workpieces with an internal chamber to be tested, in particular for cylinder heads (11) or engine blocks (12), **CHARACTERIZED BY**:
at least one leak testing machine (10; 10') as claimed in one of claims 1 to 11; and
a controller (3), which controls the changeover device or the changeover devices (10; 10') to bring a sealing plate respectively matching the workpiece automatically into operating position.

13. The system as claimed in claim 12, **CHARACTERIZED IN THAT** the controller is connected with a recognition device (6) for recognizing the type of the workpiece (12) to be loaded and controls the changeover device (10; 10') accordingly and brings the matching sealing plate automatically into operating position.

14. The system as claimed in claim 12 or 13, **CHARACTERIZED IN THAT** the system
has an industrial robot (2) for automatic workpiece handling, in particular for loading and unloading the workpiece holding device(s) with a workpiece, wherein
the controller (3) is connected to the industrial robot for workpiece handling.

15. The system as claimed in claim 12, 13 or 14, **CHARACTERIZED IN THAT** the system
has a computer-assisted measuring device (5) for measuring differential pressure or volumetric flow rate as a testing device for the automated tightness testing, wherein
the controller (3) is connected to the measuring device for tightness testing.

16. The leak testing machine (10) as claimed in claim 3, **CHARACTERIZED IN THAT** the third drive (56) is associated with the rotary indexing table (50) for bringing the workpiece out of a loading position (55B) for loading and unloading the leak testing machine into a home position (55A) upstream of the test position or into the test position and vice versa.

17. The leak testing machine (10) as claimed in claim 3, **CHARACTERIZED IN THAT** the holding arrangement (32) of the changeover device (30; 30A, 30B) is mounted swivelably on the rotary indexing table (50) coaxially with the axis of rotation (A) thereof.

18. Use of a leak testing machine (10; 10') or a system (1) as claimed in one of preceding claims 1 to 17 for tightness testing of an industrially produced workpiece with an internal chamber to be tested, in particular of a cylinder head (11) or an engine block (12).

## Revendications

1. Machine d'essai d'étanchéité (10) pour le contrôle d'étanchéité d'une culasse (11), d'un bloc moteur (12) ou d'une pièce similaire ayant au moins un volume intérieur à contrôler, comprenant:
- au moins une plaque d'étanchéité (14; 14A, 14B) avec un agencement de joints pour une zone de raccordement de la pièce;
- un bâti de machine (20) avec au moins un dispositif de maintien de la pièce (22A, 22B) pour la pièce;
- un dispositif de positionnement (24) avec au moins un premier entraînement (26) pour amener la pièce (11; 12) et la plaque d'étanchéité (14; 14A, 14B) dans une position de contrôle (25A), dans laquelle la pièce s'appuie avec la zone de raccordement de manière étanche contre l'agencement de joints de la plaque d'étanchéité;
- et comprenant de préférence un dispositif de changement (30; 30A, 30B) pour les plaques d'étanchéité (14; 14A, 14B) avec un dispositif de maintien (32) ajustable sur le bâti de la machine (20) avec un deuxième entraînement associé (36A); 36B) pour le changement de plaque d'étanchéité, en particulier pour amener un support avec plaque d'étanchéité d'une position d'attente dans une position de travail (25B) associée à la position de contrôle (25A) et vice versa, le dispositif de maintien (32) comprenant au moins deux supports (34-1,... 34-4) pour respectivement une plaque d'étanchéité et un corps de support commun (38), qui est monté de manière rotative sur le bâti de machine (20) et sur lequel corps de support commun (38) sont prévus les au moins deux supports (34-1,... 34-4); **CARACTÉRISÉ EN CE QUE**
- un dispositif rotatif (50) est prévu sur le bâti de la machine, lequel dispositif comporte l'au moins un dispositif de maintien de la pièce (22A, 22B) ainsi qu'un troisième entraînement associé (56) pour faire passer la pièce d'une position de chargement (55B), pour le chargement et le déchargement de la machine d'essai d'étanchéité, à une position de repos (55A) en amont de la position de contrôle respectivement à la position de contrôle et vice versa.

2. Machine d'essai d'étanchéité selon la revendication 1, **CARACTERISEE EN CE QUE** le corps de support (38) est monté rotatif autour d'un axe vertical (A) sur le bâti de la machine, de sorte que chaque plaque d'étanchéité (14; 14A, 14B) sur le support correspondant (34-1 etc.) est transférée par pivotement autour de l'axe (A) dans la position de fonctionnement (25A) ou amenée hors de ladite position, et/ou le corps de support (38) comporte de préférence quatre supports (34-1, 34-2, 34-3, 34-4) pour une plaque d'étanchéité (14) respectivement.

3. Machine d'essai d'étanchéité selon l'une des revendications 1 à 2, en particulier selon la revendication 2, **CARACTERISEE EN CE QUE** le dispositif rotatif (50) se présente sous la forme d'une table rotative indexée (50) pour amener la pièce par un mouvement rotatif indexé d'une position de chargement (55B) pour le chargement et le déchargement de la machine d'essai d'étanchéité à une position de départ (55A) en amont de la position de contrôle ou à la position de contrôle (25A) et vice versa.

4. Machine d'essai d'étanchéité selon la revendication 3, en particulier selon les revendications 2 et 3, **CARACTERISEE EN CE QUE** le dispositif de maintien (32), en particulier le corps de support (38), est monté de manière rotative et coaxiale à l'axe de rotation (A) de la table rotative indexée (50) et/ou sur cette dernière.

5. Machine d'essai d'étanchéité selon la revendication 4, **CARACTERISEE EN CE QUE** la table rotative indexée (50) présente un axe de rotation vertical (A) et un support central vertical (52) pouvant tourner autour de cet axe, le support central vertical (52) étant actionné par le troisième entraînement (56) et ayant au moins deux dispositifs opposés de maintien des pièces.

6. Machine d'essai d'étanchéité selon l'une des revendications 1 à 5, en particulier selon la revendication 5, **caractérisée en ce que** le dispositif de positionnement (24) présente sous la forme d'un dispositif de levage vertical respectivement un guidage linéaire vertical (58) pour chaque dispositif de maintien de pièce (22A, 22B), en particulier sur la console centrale (52), et comme premier entraînement (26) un entraînement de levage pour déplacer un dispositif de maintien de pièce avec la pièce d'une position de départ (55A) à la position de contrôle (25A) et/ou pour presser la pièce contre une plaque d'étanchéité.

7. Machine d'essai d'étanchéité selon l'une des revendications 1 à 6, en particulier tel que revendiqué dans la revendication 5 ou 6, **CARACTERISE EN CE QUE** chaque support (34-1 ...) présente un adaptateur de plaque d'étanchéité (40), avec lequel la plaque d'étanchéité (14A, 14B) est fixée de manière amovible sur le support, chaque adaptateur de plaque d'étanchéité coopérant avec le dispositif de positionnement (24), en particulier un entraînement de levage (42) supplémentaire, pour déplacer une plaque d'étanchéité sur l'adaptateur de plaque d'étanchéité (40) de la position de fonctionnement (25B) à la position de contrôle (25A) et/ou pour presser cette plaque d'étanchéité (14) contre la pièce (11; 12).

8. Machine d'essai d'étanchéité pour le contrôle de l'étanchéité d'un bloc moteur (12) ou d'un carter de moteur à combustion interne, telle que revendiquée dans l'une des revendications 1 à 7, **CARACTERISEE EN CE QUE** la machine d'essai d'étanchéité (10) comprend respectivement un jeu de deux plaques d'étanchéité (14A ; 14B) pour chaque type de pièce (12) à contrôler et comporte deux dispositifs de commutation (30A, 30B) pour les plaques d'étanchéité, avec de préférence le premier dispositif de commutation (30A) étant disposé sur le bâti de la machine au-dessus du dispositif de maintien de la pièce (22A, 22B) et le second dispositif de commutation (30B) étant disposé sur le bâti de la machine en dessous du dispositif de maintien de la pièce (22A, 22B).

9. Machine d'essai d'étanchéité selon la revendication 8, **CARACTERISEE EN CE QUE** le deuxième dispositif de commutation (30B) comprend un dispositif de maintien (32) supplémentaire monté de manière réglable sur le châssis de la machine et comportant au moins deux supports (34-1...) respectivement pour une plaque d'étanchéité (14B) et comportant un entraînement associé (36B) pour amener un support avec plaque d'étanchéité d'une position d'attente dans une position de fonctionnement associée à la position d'essai et vice versa.

10. Machine d'essai d'étanchéité telle que revendiquée dans l'une des revendications 1 à 9, **CARACTERISEE EN CE QUE**
- chaque dispositif de changement comprend au moins deux plaques d'étanchéité différentes (14A, 14B) correspondant à deux types de pièce; et/ou
- chaque support (34-1, etc.) est doté de moyens de prévention d'un accouplements incorrects (39A, 39B) correspondant précisément à un type de plaque d'étanchéité, en particulier une sécurité de verrouillage interagissant avec un adaptateur de plaque d'étanchéité (40), comme par exemple une combinaison broche de codage/réceptacle.

11. Machine d'essai d'étanchéité (10) pour l'essai d'étanchéité d'une culasse (11), d'un bloc moteur (12) ou d'un carter de moteur à combustion interne, selon l'une des revendications 1 à 10, de préférence **CARACTERISEE EN CE QU'**elle comporte plusieurs pistons d'étanchéité supplémentaires (60) pouvant être avancés transversalement à la pièce pour d'autres ouvertures dans le volume intérieur de la pièce (11 ; 12), lesquels pistons peuvent être déplacés hors de la zone de déplacement du ou des dispositifs de commutation (30A, 30B).

12. Installation (1) d'essai d'étanchéité partiellement ou entièrement automatisée pour des pièces produites industriellement avec un volume intérieur à contrôler, en particulier pour des culasses (11) ou des blocs moteurs (12), **CARACTERISE PAR**:
au moins une machine d'essai d'étanchéité (10 ; 10') selon l'une des revendications 1 à 11 ; et
un système de commande (3), qui commande le ou les dispositifs de commutation (10 ; 10') pour amener automatiquement en position de fonctionnement une plaque d'étanchéité respectivement adaptée à la pièce.

13. Installation selon la revendication 12, **CARACTERISE EN CE QUE** le contrôleur est connecté à un dispositif de reconnaissance (6) pour reconnaître le type de la pièce (12) à charger et commande le dispositif de changement (10 ; 10') en conséquence et amène automatiquement la plaque d'étanchéité correspondante en position de fonctionnement.

14. Installation selon la revendication 12 ou 13, **CARACTERISE EN CE QUE** l'installation
dispose d'un robot industriel (2) pour la manipulation automatique de pièces, en particulier pour le chargement et le déchargement du ou des dispositifs de maintien des pièces avec une pièce, dans lequel
le système de commande (3) est connecté au robot industriel pour la manipulation des pièces.

15. Installation selon la revendication 12, 13 ou 14, **CARACTERISE EN CE QUE** l'installation dispose d'un dispositif de mesure assisté par ordinateur (5) pour la mesure de la pression différentielle ou du débit volumétrique en tant que dispositif d'essai pour le contrôle automatisé de l'étanchéité, dans lequel le système de commande (3) est connecté au dispositif de mesure pour le contrôle d'étanchéité.

16. Machine d'essai d'étanchéité (10) telle que revendiquée dans la revendication 3, **CARACTERISEE EN CE QUE** le troisième entraînement (56) est associé à la table rotative indexée (50) pour amener la pièce d'une position de chargement (55B) pour le chargement et le déchargement de la machine d'essai d'étanchéité à une position de repos (55A) en amont de la position de contrôle ou à la position de contrôle et vice versa.

17. Machine d'essai d'étanchéité (10) selon la revendication 3, **CARACTERISEE EN CE QUE** le dispositif de maintien (32) du dispositif de commutation (30 ; 30A, 30B) est monté de manière rotative sur la table rotative indexée (50), de manière coaxiale à l'axe de rotation (A) de celle-ci.

18. Utilisation d'une machine d'essai d'étanchéité (10 ; 10') ou d'une installation (1) selon l'une des revendications 1 à 17 précédentes pour l'essai d'étanchéité d'une pièce fabriquée industriellement ayant un volume intérieur à contrôler, en particulier d'une culasse (11) ou d'un bloc moteur (12).
